# FASCICULE DE BREVET EUROPEEN

(11) **EP 0 709 147 B1**
(45) Date de publication et mention de la délivrance du brevet: **12.03.1997**
(21) Numéro de dépôt: 94402434.8
(22) Date de dépôt: 27.10.1994
(51) Int. Cl.: B09B 3/00, B60S 5/00, B60K 15/06, F01M 11/04

(54) **Procédé et dispositif de vidange complète du réservoir de carburant d'un véhicule automobile**
Verfahren und Vorrichtung zum vollständigen Entleeren eines Kraftstoffbehälters eines Kraftfahrzeugs
Method and device for complete draining of a fuel tank of a motor vehicle

(43) Date de publication de la demande: 01.05.1996
(73) Titulaire: AUTOMOBILES PEUGEOT, 75116 Paris (FR); AUTOMOBILES CITROEN, 92200 Neuilly-sur-Seine (FR)
(72) Inventeur: Nieser, Stefan, D-66132 Saarbrücken (DE)
(74) Mandataire: Bouget, Lucien

(56) Documents cités:
- EP-A- 0 266 482
- DE-A- 3 814 357
- DE-A- 4 214 835
- DE-A- 4 242 113
- DE-U- 9 402 540
- FR-A- 2 488 583
- FR-A- 2 560 167
- FR-A- 2 597 850

## Description

L'invention concerne un procédé et un dispositif de vidange complète du réservoir de carburant d'un véhicule automobile.

Il peut être nécessaire de réaliser une vidange complète du réservoir de carburant d'un véhicule automobile, par exemple dans le cadre de la récupération et du recyclage des matériaux des véhicules hors d'usage.

Préalablement aux opérations de recyclage et de récupération proprement dites, il est nécessaire de réaliser la dépollution des épaves automobiles et en particulier, il est nécessaire d'assurer une vidange complète des réservoirs des véhicules hors d'usage, pour des raisons de sécurité, afin d'éviter des explosions, des inflammations ou des dégagements de gaz toxiques.

Le démontage des réservoirs des épaves automobiles est une opération trop longue et trop coûteuse pour pouvoir être envisagé dans le cadre d'une opération industrielle de récupération de véhicule automobile.

Il est donc nécessaire de réaliser la vidange complète du réservoir sans démontage préalable, sur le véhicule qui repose sur le sol par l'intermédiaire de ses roues.

Il peut être nécessaire ou avantageux de réaliser la vidange sans détériorer le réservoir et en particulier, sans percer le fond du réservoir de carburant.

L'opération de perçage de la paroi de fond d'un réservoir de véhicule automobile peut s'accompagner de la production d'étincelles qui risquent d'être très dangereuses en présence de vapeurs de carburant.

Un procédé et un dispositif permettant d'effectuer la vidange complète d'un réservoir de carburant sans aucune détérioration peuvent également être appliqués dans un cadre différent du cadre de la récupération des épaves automobiles, par exemple pour réaliser des réparations par soudage au voisinage du réservoir.

En outre, les procédés et outils utilisés pour la vidange des réservoirs automobiles doivent être conçus de manière à pouvoir être utilisés dans des ateliers de réparation de véhicules automobiles.

Les réservoirs de carburant des véhicules automobiles comportent généralement une jauge constituée par un tube disposé verticalement dans le réservoir et qui est accessible à l'intérieur de l'habitacle du véhicule automobile, par exemple au niveau du coffre de transport des bagages ou sous un siège arrière du véhicule. Il n'est cependant pas possible de réaliser la vidange du réservoir en utilisant le corps tubulaire de la jauge.

Le but de l'invention est donc de proposer un procédé de vidange complète du réservoir de carburant d'un véhicule automobile comportant une jauge constituée par un tube disposé verticalement dans le réservoir sur toute sa hauteur entre une paroi supérieure et un fond du réservoir et fixé dans une ouverture traversant la paroi supérieure, ce procédé pouvant être mis en oeuvre de manière efficace, sans démontage et sans détérioration du réservoir, avec des risques très réduits pour le personnel affecté aux opérations de vidange.

Dans ce but, on démonte la jauge, on introduit dans le réservoir et on fixe dans l'ouverture de la paroi supérieure, un tube de vidange, de manière que le tube de vidange présente une extrémité inférieure au voisinage du fond du réservoir et une extrémité supérieure à l'extérieur du réservoir, au-dessus de la paroi supérieure, on relie le tube à son extrémité supérieure à la partie d'aspiration d'une pompe et on aspire le carburant dans le réservoir jusqu'à la vidange complète du réservoir.

L'invention est également relative à un dispositif de vidange complète du réservoir de carburant d'un véhicule automobile comportant une jauge constituée par un tube disposé verticalement dans le réservoir sur toute sa hauteur entre une paroi supérieure et un fond du réservoir et fixé dans une ouverture traversant la paroi supérieure, caractérisé par le fait qu'il comporte :
- un tube de vidange rigide comprenant une extrémité formant une crépine d'aspiration, des moyens de fixation amovibles dans l'ouverture de la paroi supérieure du réservoir et un ajutage de liaison à son extrémité opposée à l'extrémité formant une crépine d'aspiration,
- une pompe, et
- une tuyauterie de liaison de la pompe a l'ajutage du tube de vidange.

Afin de bien faire comprendre l'invention, on va maintenant décrire, à titre d'exemple non limitatif, en se référant aux figures jointes en annexe, un mode de réalisation du procédé de vidange suivant l'invention et d'un outil pour la mise en oeuvre de ce procédé.

La figure 1 est une vue en coupe schématique par un plan vertical de la partie arrière d'un véhicule automobile comportant un réservoir de carburant suivant un premier mode de réalisation.

La figure 2 est une vue schématique en coupe par un plan vertical de la partie arrière d'un véhicule automobile comportant un réservoir de carburant suivant un second mode de réalisation.

La figure 3 est une vue en coupe schématique par un plan vertical de la partie arrière d'un véhicule automobile pendant une opération de vidange de son réservoir de carburant, par un procédé suivant l'invention.

Les figures 3A et 3B sont des vues en coupe par un plan vertical d'un outil pour la mise en oeuvre du procédé de vidange suivant l'invention.

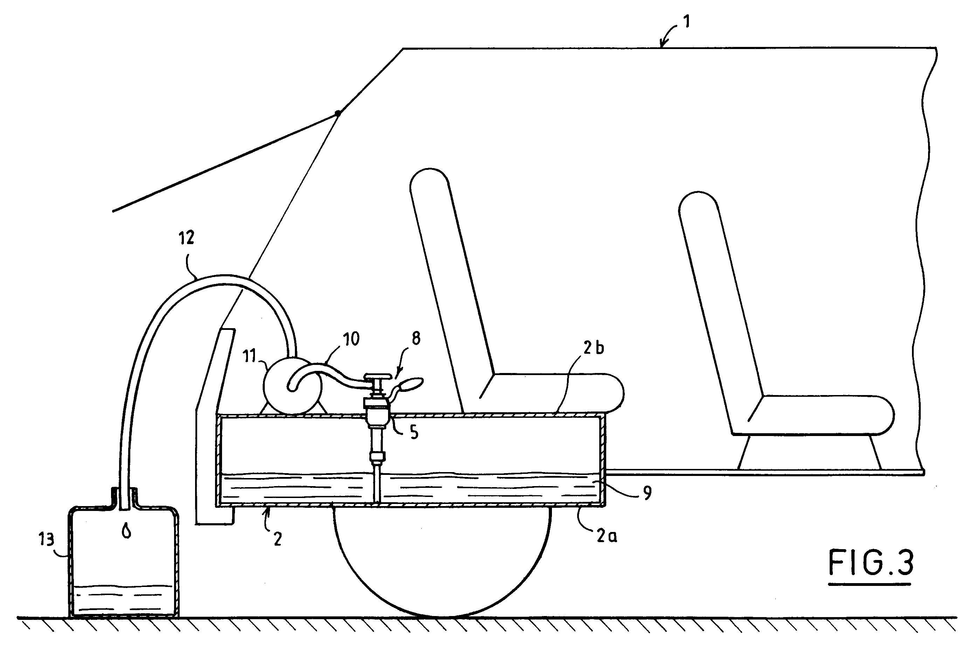

La figure 3A est une vue en coupe de l'outil engagé dans le réservoir de carburant et non fixé.

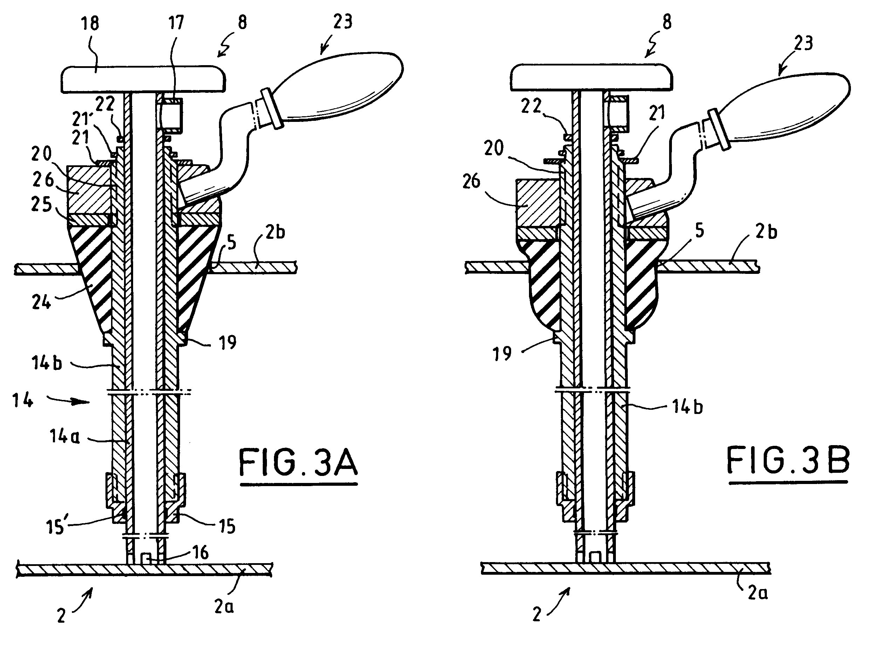

La figure 3B est une vue en coupe verticale de l'outil dans une position engagée et fixé dans le réservoir de carburant du véhicule automobile.

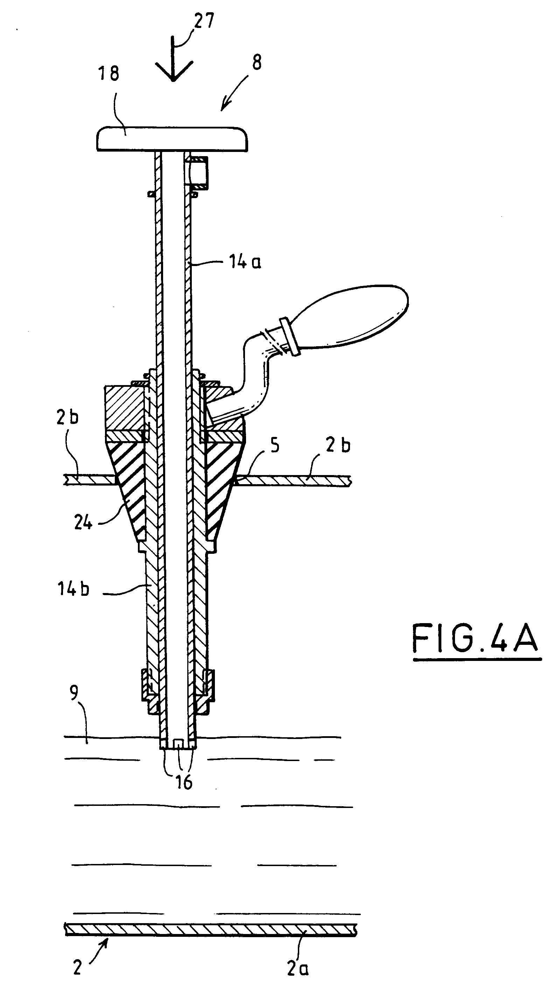

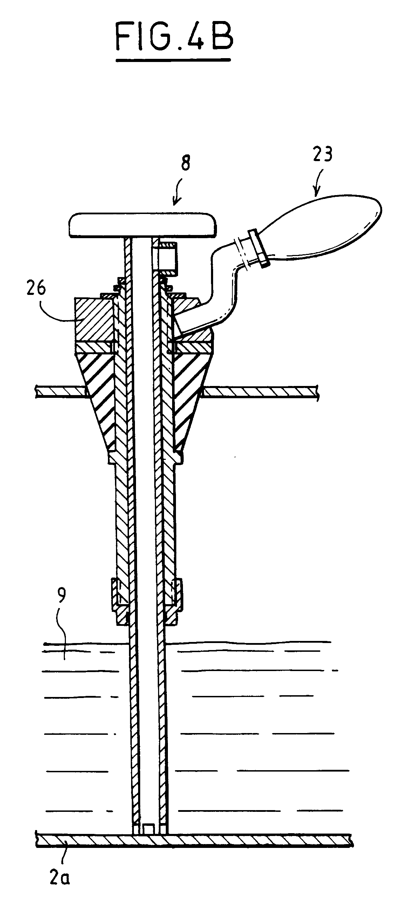

Les figures 4A et 4B sont des vues en coupe par un plan vertical d'un outil pour la mise en oeuvre d'un procédé de vidange suivant l'invention, au cours de deux phases successives de la mise en place de l'outil dans le réservoir de carburant.

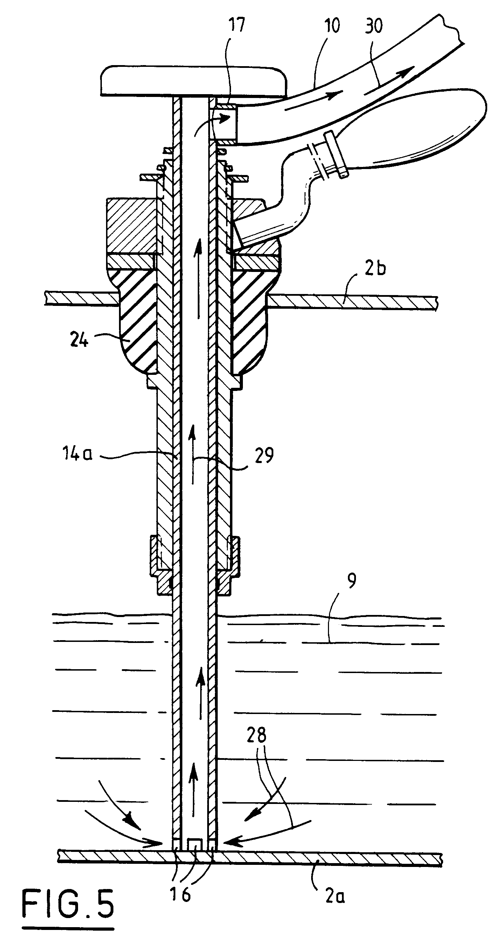

La figure 5 est une vue en coupe par un plan vertical de l'outil pendant la phase d'aspiration du carburant à l'intérieur du réservoir.

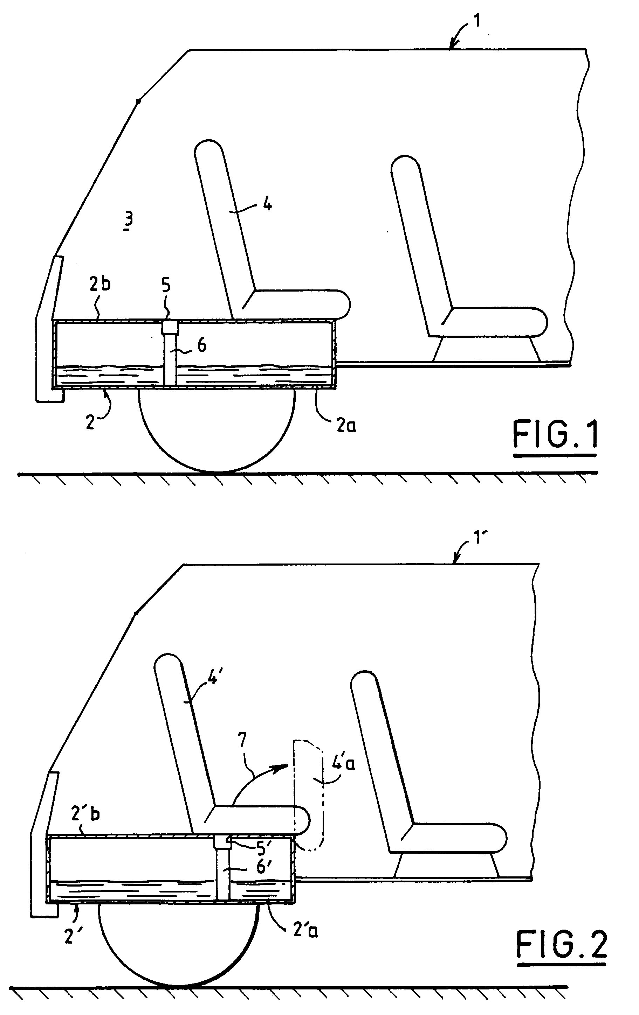

Sur la figure 1, on voit la partie arrière de la carrosserie d'un véhicule 1 comportant un réservoir de carburant 2 disposé en-dessous du coffre à bagages 3 du véhicule et de l'assise d'un siège arrière 4.

Le réservoir 2 comporte un fond 2a et une paroi supérieure 2b sensiblement parallèles entre eux. La paroi supérieure 2b est percée d'une ouverture 5 dans laquelle est fixée la partie supérieure d'une jauge 6 comportant un corps tubulaire dont l'extrémité inférieure se trouve au-dessus du fond 2a du réservoir.

L'ouverture 5 de la paroi supérieure 2b du réservoir débouche dans le coffre 3 du véhicule, de sorte que la jauge 6 est accessible par l'intérieur du coffre 3.

Sur la figure 2, on a représenté la partie arrière d'un véhicule comportant un réservoir de carburant 2' dont la paroi supérieure 2'b est percée d'une ouverture 5' dans laquelle est engagée l'extrémité supérieure du corps tubulaire d'une jauge 6'. L'extrémité inférieure du corps tubulaire de la jauge 6' se trouve au-dessus du fond 2'a du réservoir 2'.

L'ouverture 5' de la paroi supérieure 2'b du réservoir 2' est placée de manière à déboucher en-dessous de l'assise du siège arrière 4' du véhicule 1'.

En basculant le siège 4' vers l'avant, comme indiqué par la flèche 7, on place l'assise du siège 4' dans la position 4'a, de manière que l'ouverture 5' et l'extrémité de la jauge 6' soient accessibles par l'intérieur de l'habitacle du véhicule 1'.

Sur la figure 3, on a représenté la partie arrière du véhicule 1 pendant une phase de vidange du réservoir de carburant 2, en mettant en oeuvre le procédé suivant l'invention.

Le réservoir de carburant 2 renferme un reliquat de carburant 9 qui peut être constitué par de l'essence ou du gazole.

Pour la mise en oeuvre du procédé suivant l'invention, on a réalisé, par l'intérieur de l'habitacle du véhicule 1, le démontage de la jauge 6 et la mise en place dans le réservoir 2, d'un outil de vidange 8 qui est engagé et fixé dans l'ouverture 5 de la paroi supérieure 2b du réservoir 2, comme il sera expliqué plus loin.

L'outil de vidange 8 comporte une partie supérieure au-dessus de la paroi 2b du réservoir qui est reliée par l'intermédiaire d'une tuyauterie flexible 10 à la partie d'aspiration d'une pompe 11 dont le refoulement est relié, par l'intermédiaire d'une tuyauterie flexible 12, à un récipient 13 de récupération de carburant.

Le carburant 9 est aspiré par la pompe 11 dans le réservoir, par l'intermédiaire de la tuyauterie flexible 10 et de l'outil de vidange 8, immédiatement au-dessus du fond 2a du réservoir 2 et refoulé par la tuyauterie 12 à l'intérieur du récipient 13 de recueil du carburant.

Sur les figures 3A et 3B, on a représenté l'outil de vidange 8 mis en position dans le réservoir 2, préalablement à une opération de vidange.

L'outil 8 comporte un corps tubulaire 14 constitué lui-même d'un tube d'aspiration 14a et d'un fourreau de fixation 14b dans lequel le tube d'aspiration 14a est monté coulissant dans la direction axiale, grâce à une bague de guidage 15 engagée et fixée par vissage sur le corps 14b et comportant un alésage interne dans lequel le tube d'aspiration 14a est monté coulissant par l'intermédiaire d'un joint de glissement 15'.

Le tube d'aspiration 14a comporte, à son extrémité inférieure destinée à venir reposer sur le fond 2a du réservoir 2, des lumières 16 traversant sa paroi à travers lesquelles le carburant 9 restant dans le réservoir qui est aspiré peut passer à l'intérieur de l'alésage du tube d'aspiration 14a. La partie inférieure du tube d'aspiration 14a constitue ainsi une crépine d'aspiration du carburant.

Dans sa partie d'extrémité opposée à l'extrémité inférieure constituant une crépine, le tube d'aspiration 14a comporte un ajutage 17 débouchant dans l'alésage interne du tube d'aspiration 14a et une plaque d'appui 18 fermant l'extrémité du tube d'aspiration 14a au-dessus de l'alésage 17.

Le fourreau de fixation 14b comporte dans sa partie médiane un épaulement 19 en saillie radiale et dans sa partie d'extrémité supérieure, un filetage 20 audessus duquel est engagée une rondelle 21 formant épaule-ment en saillie radiale par rapport au fourreau.

Le tube d'aspiration 14a est engagé à l'intérieur du fourreau de fixation 14b, de manière que sa partie supérieure comportant la plaque de fermeture et d'appui 18 et l'ajutage 17 se trouve au-dessus de l'extrémité supérieure du fourreau 14b. Le tube d'aspiration 14a comporte un épaulement ou des ergots 22 en saillie radiale constituant des butées d'arrêt du tube 14a monté coulissant à l'intérieur du fourreau de fixation 14b.

Autour du fourreau de fixation 14b est engagée une pièce annulaire 24 en un matériau souple déformable tel que le caoutchouc présentant une surface latérale externe de forme sensiblement tronconique.
La pièce annulaire 24 en caoutchouc vient en appui sur l'épaulement 19 par l'intermédiaire de sa petite base. Une rondelle 25 dont l'alésage intérieur présente un diamètre supérieur au diamètre extérieur du fourreau de fixation 14b est engagée autour du fourreau 14b et vient reposer sur la grande base de la pièce annulaire 24.

Un écrou 26 est vissé sur la partie filetée 20 du fourreau de fixation 14b, de manière à venir en appui sur la surface supérieure de la rondelle 25 elle-même en appui sur la pièce annulaire 24.

Une poignée d'actionnement 23 est fixée dans une disposition latérale sur l'écrou 26.

Après engagement de la pièce annulaire 24, de la rondelle 25 et de l'écrou 26 autour du fourreau de fixation 14b, on engage la rondelle 21 sur la partie supérieure du fourreau ; la rondelle 21 vient reposer sur la partie supérieure du filetage 20. La rondelle 21 est rendue imperdable par l'engagement d'un circlips 21' sur la partie d'extrémité supérieure du fourreau 14b, audessus de la partie filetée 20.

Après montage des pièces 24, 25 et 26 sur le fourreau de fixation 14b, on peut engager le tube d'aspiration 14a dans l'alésage intérieur du fourreau, l'outil 8 est alors prêt pour une opération de vidange.

Dans une première étape, comme indiqué plus haut, on réalise le démontage de la jauge 6 du réservoir de carburant 2. On engage alors la partie inférieure du tube d'aspiration 14a et du fourreau 14b par l'ouverture 5 de la paroi supérieure 2b du réservoir de carburant, jusqu'au moment où la bague 24 dont le diamètre de la grande base est supérieur au diamètre de l'ouverture 5 vient reposer sur le bord de l'ouverture 5, comme représenté sur la figure 3A. On réalise alors la mise en place du tube d'aspiration 14a à l'intérieur du réservoir, de manière que sa partie inférieure constituant une crépine d'aspiration vienne reposer sur le fond 2a du réservoir. Cette opération sera décrite en regard des figures 4A et 4B.

La fixation de l'outil 8 dans l'ouverture 5 de la paroi supérieure 2b du réservoir 2 est réalisée par vissage de l'écrou 26, par l'intermédiaire de la poignée 23, sur le filetage 20 du fourreau de fixation 14b. L'écrou 26 et la rondelle 25 en appui sur la pièce annulaire déformable 24 se déplacent vers le bas, de telle sorte que la pièce annulaire déformable 24 qui est en appui par son extrémité inférieure sur l'épaulement 19 se trouve comprimée et dilatée radialement à l'intérieur de l'ouverture 5. On réalise ainsi la fixation de l'outil de vidange 18 et la fermeture étanche de l'ouverture 5 de la paroi supérieure 2b du réservoir.

Comme il est visible sur la figure 4A, lorsqu'on a engagé le dispositif de vidange 8 dans l'ouverture 5 du réservoir 2, de manière que le tube de vidange 14a et le fourreau 14b soient dans une disposition verticale et que la bague 24 vienne reposer sur le bord de l'ouverture 5, il est nécessaire de mettre en place le tube de vidange 14a à la hauteur voulue dans le réservoir 2, c'est-à-dire de manière que sa partie inférieure comportant les ouvertures 16 et constituant une crépine d'aspiration vienne en appui sur le fond 2a du réservoir. Pour cela, on pousse le tube d'aspiration 14a monté coulissant dans le fourreau 14b dans la direction verticale et vers le bas, par appui sur la plaque d'extrémité 18, comme indiqué par la flèche 27.

Lorsque la partie inférieure du tube d'aspiration 14a est venue en appui sur le fond 2a du réservoir, comme représenté sur la figure 4B, la partie inférieure du tube d'aspiration 14a plonge à l'intérieur du carburant 9 restant dans le réservoir et l'outil d'aspiration 8 est en place à l'intérieur du réservoir. On réalise alors la fixation de l'outil d'aspiration 8, comme indiqué plus haut, par vissage de l'écrou 26 par l'intermédiaire de la poignée 23.

Comme représenté sur la figure 5, l'ajutage 17 du tube d'aspiration 14a est alors relié par l'intermédiaire du tuyau flexible 10 à l'aspiration de la pompe, comme décrit en regard de la figure 3.

On met alors en fonctionnement la pompe 11, de sorte que le carburant 9 restant dans le réservoir est aspiré à l'intérieur du tube d'aspiration 14a à travers les lumières 16 à sa partie inférieure, comme indiqué par les flèches 28. Le carburant aspiré circule à l'intérieur de l'alésage du tube d'aspiration 14a dans la direction verticale et vers le haut, comme indiqué par les flèches 29. Le carburant circule ensuite dans la tuyauterie souple 10 pour parvenir à la partie d'aspiration de la pompe, comme indiqué par les flèches 30.

Le carburant récupéré dans le réservoir est refoulé dans le récipient de recueil 13.

Du fait de la disposition de la partie inférieure du tube d'aspiration 14a juste au-dessus du fond 2a du réservoir, on peut réaliser une vidange complète du réservoir.

La position du tube 14a qui peut être réglée comme indiqué sur les figures 4A et 4B permet d'adapter le dispositif à des réservoirs de types et de dimensions quelconques.

De plus, la pièce annulaire déformable 24 permet de réaliser une fermeture étanche du réservoir, de sorte que le personnel chargé de l'exécution de la vidange n'est pas exposé à des vapeurs de carburant. Du fait que les vapeurs de carburant ne peuvent sortir du réservoir et du circuit d'aspiration, l'opération de vidange est réalisée dans de très bonnes conditions de sécurité.

L'invention ne se limite pas au mode de réalisation qui a été décrit.

C'est ainsi qu'on peut mettre en place le dispositif d'aspiration et réaliser la vidange aussi bien depuis le coffre du véhicule que depuis une partie de l'habitacle située en-dessous du siège arrière, suivant la disposition de la jauge du réservoir.

L'outil de vidange associé à la pompe d'aspiration et au récipient de recueil qui est mis en place dans le réservoir peut présenter une forme et une structure différentes de celles qui ont été décrites.

L'invention s'applique non seulement dans le cadre de la dépollution des épaves automobiles avant leur recyclage mais encore dans d'autres cas, par exemple dans le cas d'une réparation d'un véhicule automobile nécessitant une intervention à proximité du réservoir et une vidange de ce réservoir.

## Revendications

1. Procédé de vidange complète du réservoir de carburant (2) d'un véhicule automobile (1) comportant une jauge (6) constituée par un tube disposé verticalement dans le réservoir sur toute sa hauteur entre une paroi supérieure (2b) et un fond (2a) du réservoir et fixée dans une ouverture (5) traversant la paroi supérieure (2b), caractérisé par le fait qu'on démonte la jauge (6), qu'on introduit dans le réservoir (2) et qu'on fixe dans l'ouverture (5) de la paroi supérieure (2b), un tube de vidange (14a), de manière que le tube de vidange (14a) présente une extrémité inférieure au voisinage du fond (2a) du réservoir (2) et une extrémité supérieure à l'extérieur du réservoir, au-dessus de la paroi supérieure (2b), qu'on relie le tube (14a) à son extrémité supérieure à une pompe d'aspiration (11) et qu'on aspire le carburant (9) dans le réservoir (2) jusqu'à la vidange complète du réservoir (2).

2. Procédé suivant la revendication 1, caractérisé par le fait qu'on règle la position du tube d'aspiration (14a) dans la direction verticale, en fonction de la dimension du réservoir dans la direction verticale, de manière que l'extrémité inférieure du tube d'aspiration (14a) vienne reposer sur le fond (2a) du réservoir (2).

3. Procédé suivant l'une quelconque des revendications 1 et 2, caractérisé par le fait qu'on réalise une fixation étanche du tube d'aspiration (14a) dans l'ouverture (5) traversant la paroi supérieure (2b) du réservoir (2).

4. Dispositif de vidange complète du réservoir de carburant (2) d'un véhicule automobile (1) comportant une jauge (6) constituée par un tube disposé verticalement dans le réservoir (2) sur toute sa hauteur entre une paroi supérieure (2b) et un fond (2a) du réservoir et fixée dans une ouverture (5) traversant la paroi supérieure (2b), caractérisé par le fait qu'il comporte :
- un tube de vidange rigide (14a) comprenant une extrémité formant une crépine d'aspiration et un ajutage (17) de liaison à son extrémité opposée à l'extrémité formant crépine d'aspiration, des moyens de fixation amovibles (14b, 24, 26) du tube (14a) dans l'ouverture (5) de la paroi supérieure (2) du réservoir (2),
- une pompe (11), et
- une tuyauterie (1O) de liaison de la partie d'aspiration de la pompe (11) à l'ajutage (17) du tube de vidange (14a).

5. Dispositif suivant la revendication 4, caractérisé par le fait que les moyens de fixation amovibles du tube (14a) dans l'ouverture (5) de la paroi supérieure (2b) du réservoir (2) sont constitués par un fourreau tubulaire (14b) dans lequel le tube de vidange (14a) est monté coulissant dans la direction axiale, une pièce annulaire (24) en une matière souple engagée sur la surface extérieure du fourreau de fixation (14b) en appui contre un épaulement (19) du fourreau (14b) en saillie radiale vers l'extérieur et un moyen de compression (25, 26) de la pièce annulaire (24) dans la direction axiale et de dilatation radiale de cette pièce annulaire à l'intérieur de l'ouverture (5).

6. Dispositif suivant la revendication 5, caractérisé par le fait que les moyens de compression (25, 26) de la pièce annulaire en matériau souple (24) sont constitués par un écrou (26) engagé sur une partie filetée (20) de la surface extérieure du fourreau de fixation (14b) et une rondelle d'appui (25) sur une partie d'extrémité de la pièce annulaire (24) en matériau souple opposée à sa partie en appui sur l'épaulement (19) du fourreau (14b).

7. Dispositif suivant l'une quelconque des revendications 5 et 6, caractérisé par le fait que la pièce annulaire en matériau souple (24) présente une surface extérieure de forme tronconique.

8. Dispositif suivant l'une quelconque des revendications 6 et 7, caractérisé par le fait que l'écrou (26) est solidaire d'une poignée d'actionnement (23) disposée latéralement.

9. Dispositif suivant l'une quelconque des revendications 4 à 8, caractérisé par le fait que le tube d'aspiration (14a) comporte à son extrémité formant une crépine d'aspiration et destinées à venir reposer sur le fond (2a) du réservoir (2), des ouvertures (16) traversant sa paroi.

10. Dispositif suivant l'une quelconque des revendications 4 à 9, caractérisé par le fait que le tube d'aspiration (14a) comporte à son extrémité opposée à son extrémité formant une crépine d'aspiration, une plaque (18) d'appui et de fermeture de l'extrémité du tube, par l'intermédiaire de laquelle le tube d'aspiration (14a) peut être déplacé dans la direction axiale.

## Claims

1. Method for completely draining the fuel tank (2) of a motor vehicle (1) including a gauge (6) consisting of a tube arranged vertically in the tank over its entire height between a top wall (2b) and a bottom (2a) of the tank and fixed into an opening (5) passing through the top wall (2b); characterized in that the gauge (6) is removed; that a draining tube (14a) is inserted into the tank (2) and fixed into the opening (5) in the top wall (2b) so that the draining tube (14a) has a lower end close to the bottom (2a) of the tank (2) and an upper end outside the tank, above the top wall (2b); that the tube (14a) is connected at its upper end to a suction pump (11); and that the fuel (9) is sucked from the tank (2) until the tank (2) is completely empty.

2. Method according to Claim 1, characterized in that the position of the suction tube (14a) is adjusted in the vertical direction as a function of the size of the tank in the vertical direction, so that the lower end of the suction tube (14a) rests on the bottom (2a) of the tank (2).

3. Method according to either of Claims 1 and 2, characterized in that the suction tube (14a) is fixed in a sealed manner into the opening (5) passing through the top wall (2b) of the tank (2).

4. Device for completely draining the fuel tank (2) of a motor vehicle (1) including a gauge (6) consisting of a tube arranged vertically in the tank (2) over its entire height between a top wall (2b) and a bottom (2a) of the tank and fixed into an opening (5) passing through the top wall (2b) characterized in that it includes:
- a rigid draining tube (14a) comprising one end forming a suction strainer and a connecting nozzle (17) at its opposite end to the end forming the suction strainer, means (14b, 24, 26) for removably fixing the tube (14a) in the opening (5) in the top wall (2) of the tank (2),
- a pump (11) and
- pipework (10) for connecting the suction part of the pump (11) to the nozzle (17) of the draining tube (14a).

5. Device according to Claim 4, characterized in that the means for removably fixing the tube (14a) in the opening (5) in the top wall (2b) of the tank (2) consist of a tubular sleeve (14b) in which the draining tube (14a) is mounted so that it can slide in the axial direction, an annular component (24) made of a flexible material engaged over the outside surface of the fastening sleeve (14b) resting against a shoulder (19) of the sleeve (14b) which projects radially outwards, and a means (25, 26) for compressing the annular component (24) in the axial direction and radially expanding this annular component inside the opening (5).

6. Device according to Claim 5, characterized in that the means (25, 26) for compressing the annular component (24) made of flexible material consist of a nut (26) engaged over a threaded part (20) of the exterior surface of the fastening sleeve (14b) and a washer (25) for bearing against an opposite end part of the annular component (24) made of flexible material to its part which bears on the shoulder (19) of the sleeve (14b).

7. Device according to either one of Claims 5 and 6, characterized in that the annular component (24) made of flexible material has an exterior surface of frustoconical shape.

8. Device according to either one of Claims 6 and 7, characterized in that the nut (26) is integral with an operating handle (23) arranged at the side.

9. Device according to any one of Claims 4 to 8, characterized in that the suction tube (14a), at its end forming a suction strainer and intended to rest on the bottom (2a) of the tank (2), has openings (16) passing through its wall.

10. Device according to any one of Claims 4 to 9, characterized in that the suction tube (14a), at its opposite end to its end forming a suction strainer, has a plate (18) for supporting and closing the end of the tube, by means of which plate the suction tube (14a) can be shifted in the axial direction.

## Patentansprüche

1. Verfahren zum vollständigen Entleeren des Kraftstofftanks (2) eines Kraftfahrzeugs (1), der einen Pegelstab (6) aufweist, welcher aus einem Rohr besteht, das vertikal in dem Tank über seine gesamte Höhe zwischen einer oberen Wand (2b) und einem Boden (2a) des Tanks angeordnet ist und in einer die obere Wand (2b) durchlaufenden Öffnung (5) befestigt ist, dadurch gekennzeichnet, daß der Pegelstab (6) entfernt wird, daß ein Entleerungsrohr (14a) so in den Tank (2) eingeführt und in der Öffnung (5) der oberen Wand (2b) befestigt wird, daß das Entleerungsrohr (14a) ein unteres Ende nahe dem Boden (2a) des Tanks (2) und ein oberes Ende außerhalb des Tanks über der oberen Wand (2b) aufweist, daß das Rohr (14a) an seinem oberen Ende mit einer Saugpumpe (11) verbunden wird und daß der Kraftstoff (9) in dem Tank (2) bis zur vollständigen Entleerung des Tanks (2) abgesaugt wird.

2. Verfahren nach Anspruch 1, dadurch gekennzeichnet, daß die Position des Saugrohrs (14a) in der vertikalen Richtung je nach der Abmessung des Tanks in der vertikalen Richtung so eingestellt wird, daß das untere Ende des Saugrohrs (14a) auf dem Boden (2a) des Tanks (2) aufliegt.

3. Verfahren nach einem der Ansprüche 1 und 2, dadurch gekennzeichnet, daß eine dichte Befestigung des Saugrohrs (14a) in der die obere Wand (2b) des Behälters (2) durchlaufenden Öffnung (5) erfolgt.

4. Vorrichtung zum vollständigen Entleeren des Kraftstofftanks (2) eines Kraftfahrzeugs (1), der einen Pegelstab (6) aufweist, welcher aus einem Rohr besteht, das vertikal in dem Tank (2) über seine gesamte Höhe zwischen einer oberen Wand (2b) und einem Boden (2a) des Tanks angeordnet ist und in einer die obere Wand (2b) durchlaufenden Öffnung (5) befestigt ist, dadurch gekennzeichnet, daß sie umfaßt:
- ein starres Entleerungsrohr (14a) mit einem Ende, das einen Saugkopf bildet, mit einem Verbindungsstutzen (17) an seinem dem saugkopfbildenden Ende gegenüberliegenden Ende und mit losbaren Mitteln (14b, 24, 26) zur Befestigung des Rohrs (14a) in der Öffnung (5) der oberen Wand (2b) des Tanks (2)
- eine Pumpe (11) und
- eine Verbindungsleitung (10) zur Verbindung des Ansaugteils der Pumpe (11) mit dem Stutzen (17) des Entleerungsrohres (14a).

5. Vorrichtung nach Anspruch 4, dadurch gekennzeichnet, daß die lösbaren Mittel zur Befestigung des Rohres (14a) in der Öffnung (5) der oberen Wand (2b) des Behälters (2) aus einer röhrenförmigen Hülse (14b), in der das Entleerungsrohr (14a) in der axialen Richtung verschiebbar montiert ist, einem ringförmigen Stück (24) aus einem weichen Material, das auf der äußeren Oberflache der Befestigungshülse (14b) angeordnet ist und an einer radial nach außen vorspringenden Schulter (19) der Hülse (14b) anliegt, und einem Mittel zum Zusammendrücken (25, 26) des ringförmigen Stücks (24) in der axialen Richtung und zur radialen Ausdehnung dieses ringförmigen Stücks im Innern der Öffnung (5) bestehen.

6. Vorrichtung nach Anspruch 5, dadurch gekennzeichnet, daß die Mittel zum Zusammendrücken (25, 26) des ringförmigen Stücks aus weichem Material (24) aus einer Mutter (26), die auf einem gewindeten Teil (20) der äußeren Oberfläche der Befestigungshülse (14b) angebracht ist, und einer Druckscheibe (25) auf einem Endteil des ringförmigen Stücks (24) aus weichem Material, das seinem auf der Schulter (19) der Hülse (14b) aufliegenden Teil gegenüberliegt, bestehen.

7. Vorrichtung nach einem der Ansprüche 5 und 6, dadurch gekennzeichnet, daß das ringförmige Stück aus weichem Material (24) eine kegelstumpfförmige äußere Oberfläche aufweist.

8. Vorrichtung nach einem der Ansprüche 6 und 7, dadurch gekennzeichnet, daß die Mutter (26) mit einem seitlich angeordneten Betätigungsgriff (23) einstückig ist.

9. Vorrichtung nach einem der Ansprüche 4 bis 8, dadurch gekennzeichnet, daß das Saugrohr (14a) an seinem Ende, das einen Saugkopf bildet und dazu bestimmt ist, auf dem Boden (2a) des Tanks (2) aufzuliegen, Öffnungen (16) aufweist, die seine Wand durchlaufen.

10. Vorrichtung nach einem der Ansprüche 4 bis 9, dadurch gekennzeichnet, daß das Saugrohr (14a) an seinem Ende, das seinem saugkopfbildenden Ende gegenüberliegt, eine Druck- und Verschlußplatte (18) für das Ende des Rohrs aufweist, mit deren Hilfe das Saugrohr (14a) in der axialen Richtung verschoben werden kann.
